# FASCICULE DE BREVET EUROPEEN

(11) **EP 4 164 905 B1**
(45) Date de publication et mention de la délivrance du brevet: **23.10.2024**
(21) Numéro de dépôt: 21732958.0
(22) Date de dépôt: 10.05.2021
(51) Int. Cl.: B60J 10/265, B60J 10/75, B60R 13/02

(54) **ENJOLIVEUR DE PORTE DE VÉHICULE AUTOMOBILE**
KRAFTFAHRZEUGTÜRVERKLEIDUNG
MOTOR VEHICLE DOOR TRIM

(30) Priorité: 16.06.2020 FR 2006276
(43) Date de publication de la demande: 19.04.2023
(73) Titulaire: Stellantis Auto SAS, 78300 Poissy (FR)
(72) Inventeur: GUILLY, Xavier, 91620 NOZAY (FR); PAIN, Stephanie, 78120 RAMBOUILLET (FR); AGUADO, Luc, 78480 VERNEUIL SUR SEINE (FR)
(86) Numéro de dépôt international: PCT/FR2021/050794
(87) Numéro de publication internationale: WO 2021/255357

(56) Documents cités:
- EP-B1- 2 066 514
- FR-A1- 2 703 006
- US-A1- 2017 057 334
- US-A1- 2017 225 553

## Description

La présente invention revendique la priorité de la demande française 2006276 déposée le 16 juin 2020, dont le contenu (texte, dessins et revendications) est ici incorporé par référence.

### Domaine technique

L'invention a trait au domaine des véhicules automobiles, et plus particulièrement à des portes vitrées de véhicules automobiles.

### Technique antérieure

Classiquement, les portes de véhicules automobiles comprennent, dans une partie inférieure de la porte, un panneau extérieur et, à l'intérieur, une doublure de porte. La doublure forme également un cadre de vitre. De plus, une garniture de porte est également disposée contre le panneau intérieur, de manière à recouvrir et à habiller la doublure de porte.

La garniture de porte comprend un panneau, rigide ou semi-rigide, et généralement vertical, avec une partie supérieure courbée suivant environ 180°, de manière à présenter un bord supérieur dirigé vers le bas. Ce bord est configuré pour s'engager avec un bord supérieur de la doublure de porte, dirigé vers le haut. En pratique, lors du montage de la garniture, celle-ci, après avoir été mise en position rapprochée, est déplacée suivant une translation dirigée vers le bas combinée à une rotation. Cette combinaison de mouvements peut conduire à une discontinuité entre un bord latéral de la garniture, en appui sur la doublure de porte, et un joint de vitre adjacent. Cette discontinuité forme un jeu inesthétique diminuant la qualité perçue de la porte.

Le document de brevet publié EP 1 422 095 A2 divulgue un élément d'habillage inséré dans la fente de passage de la vitre d'une porte de véhicule, à une extrémité arrière de ladite fente. Ainsi, cet élément sert à combler un espace sinon béant à une extrémité arrière de la porte, avec lequel un utilisateur du véhicule est susceptible de se blesser par accrochage. Le document EP 2 066 514 B1 divulgue une porte de véhicule similaire au préambule de la revendication 1.

### Exposé de l'invention

L'invention a pour objectif de pallier au moins un des inconvénients de l'état de la technique susmentionné. Plus particulièrement, l'invention a pour objectif d'améliorer la qualité perçue de l'intérieur d'une porte de véhicule, et plus particulièrement encore d'améliorer le raccordement des bords latéraux de la garniture avec le reste de la porte.

L'invention a pour objet une porte de véhicule automobile, comprenant : un panneau extérieur ; une doublure formant un panneau intérieur disposé contre le panneau extérieur, et un cadre de vitre ; un joint de vitre monté sur le cadre de vitre, avec une lèvre contre ledit cadre de vitre ; une garniture disposée contre le panneau intérieur et présentant un bord latéral avec une extrémité supérieure alignée avec une extrémité inférieure de la lèvre du joint de vitre ; remarquable en ce que ladite porte comprend, en outre : un enjoliveur comprenant une portion de lèvre adjacente à l'extrémité inférieure de la lèvre du joint de vitre et à l'extrémité supérieure du bord latéral de la garniture.

Selon l'invention, la portion de lèvre de l'enjoliveur présente un profil transversal extérieur identique à un profil transversal extérieur de la lèvre du joint de vitre, de manière à former une continuité du profil extérieur de ladite lèvre. Selon un mode avantageux de l'invention, l'extrémité inférieure de la lèvre du joint de vitre présente une section réduite et chaussée par la portion de lèvre de l'enjoliveur.

Selon un mode avantageux de l'invention, la portion de lèvre de l'enjoliveur s'étend suivant une direction principale verticale ou inclinée de moins de 30° par rapport à une direction verticale, sur une longueur qui est inférieure ou égale à 30mm.

Selon un mode avantageux de l'invention, l'enjoliveur comprend, en outre, un support fixé au panneau intérieur sous la garniture.

Selon un mode avantageux de l'invention, le support comprend une rainure chaussant un bord supérieur de feuillure du panneau intérieur.

Selon un mode avantageux de l'invention, la portion de lèvre de l'enjoliveur est en matériau élastomère surmoulé sur le support en matériau plastique rigide.

Selon un mode avantageux de l'invention, l'extrémité supérieure du bord latéral de la garniture est en retrait verticalement par rapport à un bord supérieur de ladite garniture.

Selon un mode avantageux de l'invention, le joint de vitre est un joint de vitre fixe.

L'invention a également pour objet un véhicule automobile comprenant au moins deux portes vitrées, remarquable en ce qu'au moins une des aux moins deux portes vitrées est selon l'invention.

Les mesures de l'invention sont intéressantes en ce qu'elles permettent d'améliorer la qualité perçue de l'intérieur d'une porte de véhicule automobile. Plus particulièrement, la qualité de la porte est améliorée au niveau de la jonction entre le bord latéral de la garniture et le joint de vitre, en diminuant le jeu entre la lèvre du joint de vitre et l'extrémité supérieure du bord latéral de la garniture, et malgré la contrainte d'un mouvement combiné de translation et de rotation de la garniture lors du montage. Ceci est d'autant plus vrai lorsque la garniture présente un profil supérieur remontant vers l'arrière (ou éventuellement vers l'avant) du véhicule. Un tel profil augmente en effet l'amplitude de mouvement du bord latéral correspondant lors du montage de la garniture.

D'autres caractéristiques et avantages de la présente invention seront mieux compris à l'aide de la description et des dessins.

### Brève description des dessins

[Fig 1] est une vue en perspective depuis l'arrière d'un véhicule automobile selon l'invention ;
[Fig 2] est une vue de l'intérieur d'une partie d'une porte arrière du véhicule automobile de la figure 1 ;
[Fig 3] est un agrandissement du montage d'un joint de vitre sur une doublure de porte selon l'invention ;
[Fig 4] est une vue d'une face intérieure d'un enjoliveur selon l'invention ;
[Fig 5] est une vue en perspective de l'enjoliveur de la figure 4 ;
[Fig 6] est un agrandissement du montage de l'enjoliveur des figures 4 et 5 sur la doublure de porte.

### Description détaillée

Les exemples décrits ci-après sont donnés à titre indicatif, mais d'autres applications ou modes de réalisation de l'invention non-décrits peuvent être envisagés. Sur ces figures, une direction longitudinale x est définie comme la direction, en marche avant, du véhicule. Une direction verticale z est perpendiculaire à la direction longitudinale x, la flèche s'étendant du bas vers le haut. L'intérieur et l'extérieur sont définis par rapport à l'habitacle du véhicule, et suivant le montage des pièces dans le véhicule.

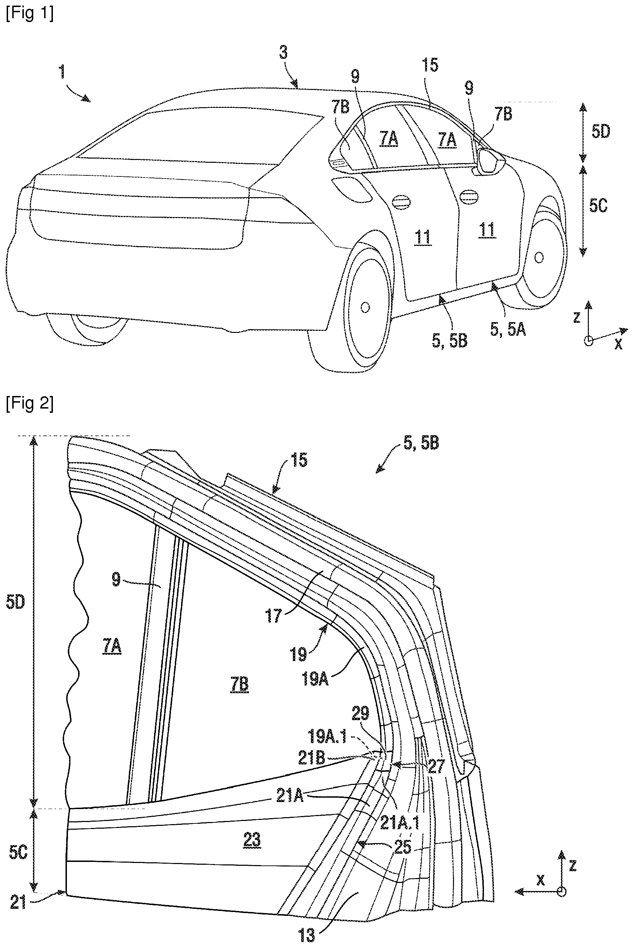

La figure 1 représente un véhicule automobile selon l'invention. La figure 2 montre une vue partielle d'une porte arrière droite du véhicule de la figure 1, vue de l'intérieur. Les figures 1 et 2 seront décrites ensemble.

Le véhicule automobile 1 comprend une structure de carrosserie 3 dans laquelle sont montées, à chacun des côtés de ladite structure 3, au moins une porte 5 du véhicule 1. Le véhicule 1 comprend plus spécifiquement au moins deux portes 5 vitrées. Avantageusement, les portes 5 sont au nombre de quatre, soit deux portes avant 5A et deux portes arrière 5B, chaque porte (5, 5A, 5B) pouvant comprendre une vitre coulissante 7A et une vitre fixe 7B, les vitres (7A, 7B) étant séparées par une barre de maintien 9. Chaque porte (5, 5A, 5B) comprend, en outre, un panneau extérieur 11 fixé à une doublure 13 formant un panneau intérieur, la doublure 13 étant disposée contre le panneau extérieur 11. La porte 5 comprend, en outre, une portion inférieure 5C et une portion supérieure 5D, la portion supérieure 5D réceptionnant les vitres (7A, 7B). La doublure 13 forme autour des vitres (7A, 7B) un cadre de vitre 15.

La doublure 13 de porte 5 supporte un joint d'étanchéité 17 monté sur le bord de la porte 5, le joint 17 servant à amortir la fermeture de la porte (5, 5A, 5B) et à limiter l'introduction de bruits, de poussières et d'humidité dans l'habitacle. La porte (5, 5A, 5B) comprend, en outre, un joint de vitre 19 monté sur le cadre de vitre 15, le joint 19 comprenant une lèvre 19A positionnée contre le cadre de vitre 15. Le joint 19 est couramment désigné coulisse de vitre en ce que ce joint 19 forme une fente recevant la vitre, avantageusement le joint de vitre 19 est un joint de vitre 19 fixe.

La porte (5, 5A, 5B) du véhicule 1 comprend, en outre, une garniture 21 positionnée contre la doublure 13, au niveau de la portion inférieure 5C de la porte 5. La garniture 21 comprend un bord latéral 21A dont une extrémité supérieure 21A.1 est alignée avec une extrémité inférieure 19A.1 de la lèvre 19A du joint de vitre 19. La garniture 21 comprend, en outre, un support 25 en matériau plus rigide et recouvert d'un matériau d'habillage 23, le support 25 formant notamment le bord latéral 21A et chevauchant un bord supérieur de feuillure (non visible sur cette figure) de la doublure 13. Avantageusement, l'extrémité supérieure 21A.1 du bord latéral 21A de la garniture 21 est en retrait, verticalement, par rapport à un bord supérieur 21B de la garniture 21. Entre le joint de vitre 19 et le bord latéral 21A de la garniture 21 se trouve un enjoliveur 27 selon l'invention, et plus particulièrement une portion de lèvre 29 dudit enjoliveur 27. Cette portion de lèvre 29 est adjacente à l'extrémité inférieure 19A.1 de la lèvre 19A du joint de vitre 19, tout en étant adjacente à l'extrémité supérieure 21A.1 du bord latéral 21A de la garniture 21. De plus, la portion de lèvre 29 de l'enjoliveur 27 présente un profil transversal extérieur identique à un profil transversal extérieur de la lèvre 19A du joint de vitre 19, de manière à former une continuité du profil extérieur de la lèvre 19A.

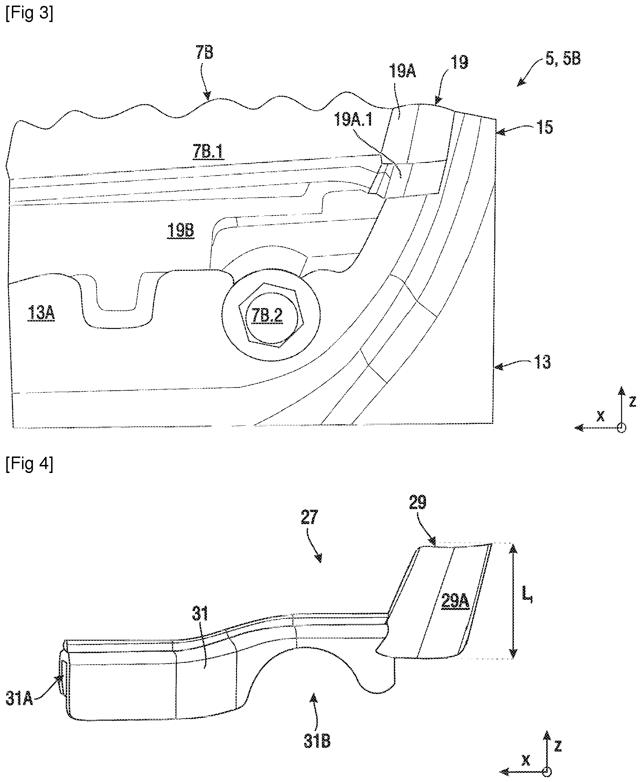

La figure 3 est un agrandissement de la zone de montage entre le joint de vitre et la doublure de porte.

Sur cette figure, on peut voir partiellement un bord supérieur de feuillure 13A de la doublure 13 de porte (5, 5B), avec le cadre de vitre 15 et la vitre fixe 7B. Sur le cadre de vitre 15 est monté le joint de vitre 19. Ce joint 19 comprend la lèvre 19A qui s'étend dans la direction verticale z le long du cadre de vitre 15, et une portion inférieure 19B qui s'étend longitudinalement le long du bord supérieur de feuillure 13A de la doublure 13. La portion inférieure 19B du joint de vitre 19 va réceptionner une extrémité inférieure 7B.1 de la vitre fixe 7B, de manière à ce que la vitre fixe 7B soit maintenue sur la doublure 13. Une vis de fixation 7B.2 va permettre le maintien entre la vitre fixe 7B, la doublure 13 et le joint de vitre 19. Enfin, sur cette figure, on peut voir que l'extrémité inférieure 19A.1 de la lèvre 19A du joint de vitre 19 présente une section réduite, dont la fonction sera étudiée plus loin.

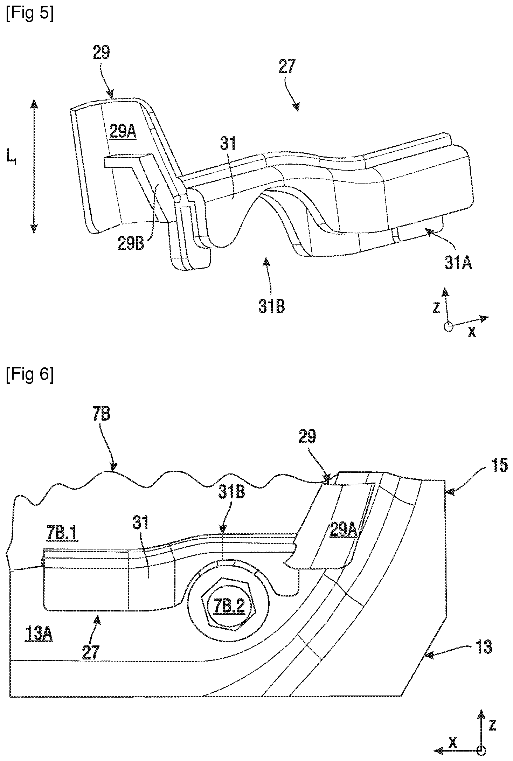

Les figures 4 et 5 montrent deux vues de l'enjoliveur selon l'invention, respectivement une vue d'une face intérieure de l'enjoliveur et une vue en perspective dudit enjoliveur. La figure 6 montre l'enjoliveur monté sur la garniture. Ces figures 4 à 6 seront décrites ensemble. Sur ces figures, l'enjoliveur est adapté à une porte arrière de véhicule automobile.

L'enjoliveur 27 comprend la portion de lèvre 29 et un support 31. La portion de lèvre 29 de l'enjoliveur 27 s'étend suivant une direction principale verticale ou inclinée de moins de 30° par rapport à la direction verticale z. De plus, la portion de lèvre 29 s'étend sur une longueur L_{I} inférieure ou égale à 30mm. La portion de lèvre 29 comprend un premier élément 29A formant le profil transversal extérieur, et un deuxième élément interne 29B formant une patte qui se positionne contre l'extrémité inférieure de la lèvre du joint de vitre (ce joint n'étant pas représenté sur les figures 4 à 6). Ainsi, l'extrémité inférieure à section réduite de la lèvre du joint de vitre est chaussée par la portion de lèvre 29 de l'enjoliveur 27. La portion de lèvre 29 de l'enjoliveur 27 est avantageusement réalisée en matériau élastomère.

Le support 31 de l'enjoliveur 27 est fixé à la doublure 13 formant le panneau intérieur, sous la garniture (la garniture n'étant pas représentée sur les figures 4 à 6). Ce support 31 comprend une rainure 31A qui chausse le bord supérieur de feuillure 13A de la doublure 13. Le support 31 est avantageusement réalisé en matériau plastique rigide, la portion de lèvre 29, réalisée en matériau élastomère, étant avantageusement surmoulée sur le support 31. Avantageusement, le support 31 de l'enjoliveur 27 présente une courbure dans une portion arrière 31B, lorsque l'enjoliveur 27 est monté sur une doublure 13 de porte arrière, la portion arrière 31B étant apte à entourer la vis de fixation 7B.2.

L'invention se rapporte également à un procédé de montage de la porte de véhicule automobile, telle que décrite aux figures 1 à 6. Ce procédé comprend les étapes suivantes, décrites en corrélation avec les figures 1 à 6.

Assemblage par ferrage du panneau extérieur 11 de la porte avec la doublure 13 qui forme notamment le cadre de vitre 15.

Le joint de vitre 19 est monté sur le cadre de vitre 15, la portion inférieure 19B dudit joint 19 étant fixée sur le bord supérieur de feuillure 13A de la doublure 13 de porte (5, 5A, 5B). La lèvre 19A du joint de vitre 19 s'étend le long du cadre de vitre 15. La vitre fixe 7B est ensuite montée dans la porte (5, 5A, 5B), elle prend appui sur la portion inférieure 19B du joint de vitre 19, sur la lèvre 19A et sur le cadre de vitre 15.

L'enjoliveur 27 est ensuite monté sur le bord supérieur de feuillure 13A de la doublure 13, de manière à ce que le support 31 de l'enjoliveur 27 chausse ledit bord supérieur 13A de la doublure 13 et que la portion de lèvre 29 de l'enjoliveur 27 recouvre l'extrémité inférieure 19A.1 à section réduite de la lèvre 19A du joint de vitre 19.

Enfin, la garniture 21 de la porte (5, 5A, 5B) est montée sur la doublure 13 par un mouvement combiné en translation et en rotation de ladite garniture 21. La présence de l'enjoliveur 27 permet de combler le jeu entre la garniture 21 et la lèvre 19A du joint de vitre 19.

## Revendications

1. Porte (5, 5A, 5B) de véhicule automobile (1), comprenant :
- un panneau extérieur (11) ;
- une doublure (13) formant un panneau intérieur disposé contre le panneau extérieur (11), et un cadre de vitre (15) ;
- un joint de vitre (19) monté sur le cadre de vitre (15), avec une lèvre (19A) contre ledit cadre de vitre (15) ;
- une garniture (21) disposée contre le panneau intérieur et présentant un bord latéral (21A) avec une extrémité supérieure (21A.1) alignée avec une extrémité inférieure (19A.1) de la lèvre (19A) du joint de vitre (19) ;
ladite porte (5, 5A, 5B) comprenant, en outre :
- un enjoliveur (27) comprenant une portion de lèvre (29) adjacente à l'extrémité inférieure (19A.1) de la lèvre (19A) du joint de vitre (19) et à l'extrémité supérieure (21A.1) du bord latéral (21A) de la garniture (21), **caractérisée en ce que** la portion de lèvre (29) de l'enjoliveur (27) présente un profil transversal extérieur identique à un profil transversal extérieur de la lèvre (19A) du joint de vitre (19), de manière à former une continuité du profil extérieur de ladite lèvre (19A).

2. Porte (5, 5A, 5B) de véhicule automobile (1) selon l'une des revendications 1, **caractérisée en ce que** l'extrémité inférieure (19A.1) de la lèvre (19A) du joint de vitre (19) présente une section réduite et chaussée par la portion de lèvre (29) de l'enjoliveur (27).

3. Porte (5, 5A, 5B) de véhicule automobile (1) selon la revendication 1 ou 2, **caractérisée en ce que** la portion de lèvre (29) de l'enjoliveur (27) s'étend suivant une direction principale verticale ou inclinée de moins de 30° par rapport à une direction verticale (z), sur une longueur (L_{I}) qui est inférieure ou égale à 30mm.

4. Porte (5, 5A, 5B) de véhicule automobile (1) selon l'une des revendications 1 à 3, **caractérisée en ce que** l'enjoliveur (27) comprend, en outre, un support (31) fixé au panneau intérieur sous la garniture (21).

5. Porte (5, 5A, 5B) de véhicule automobile (1) selon la revendication 4, **caractérisée en ce que** le support (31) comprend une rainure (31A) chaussant un bord supérieur de feuillure (13A) du panneau intérieur.

6. Porte (5, 5A, 5B) de véhicule automobile (1) selon l'une des revendications 4 et 5, **caractérisée en ce que** la portion de lèvre (29) de l'enjoliveur (27) est en matériau élastomère surmoulé sur le support (31) en matériau plastique rigide.

7. Porte (5, 5A, 5B) de véhicule automobile (1) selon l'une des revendications 1 à 6, **caractérisée en ce que** l'extrémité supérieure (21A.1) du bord latéral (21A) de la garniture (21) est en retrait verticalement par rapport à un bord supérieur (21B) de ladite garniture (21).

8. Porte (5, 5A, 5B) de véhicule automobile (1) selon l'une des revendications 1 à 7, **caractérisée en ce que** le joint de vitre (19) est un joint de vitre (19) fixe.

9. Véhicule automobile (1) comprenant au moins deux portes (5, 5A, 5B) vitrées, **caractérisé en ce qu'**au moins une des aux moins deux portes (5, 5A, 5B) vitrées est selon l'une des revendications 1 à 8.

## Patentansprüche

1. Tür (5, 5A, 5B) eines Kraftfahrzeugs (1), bestehend aus:
- eine Außenverkleidung (11);
- eine Auskleidung (13), die eine an der Außenverkleidung (11) angeordnete Innenverkleidung und einen Fensterrahmen (15) bildet;
- eine am Scheibenrahmen (15) angebrachte Scheibendichtung (19) mit einer Lippe (19A) an dem Scheibenrahmen (15);
- eine Dichtung (21), die an der Innenfläche angeordnet ist und einen Seitenrand (21A) mit einem oberen Ende (21A.1) aufweist, das mit einem unteren Ende (19A. 1) der Lippe (19A) der Scheibendichtung (19) fluchtet;
die Tür (5, 5A, 5B) umfasst ferner:
- eine Zierkappe (27), die einen Lippenabschnitt (29) aufweist, der an das untere Ende (19A.1) der Lippe (19A) der Scheibendichtung (19) und an das obere Ende (21A.1) des Seitenrandes (21A) der Dichtung (21) angrenzt, **dadurch gekennzeichnet, dass** der Lippenabschnitt (29) der Zierkappe (27) ein äußeres Querprofil aufweist, das mit einem äußeren Querprofil der Lippe (19A) der Scheibendichtung (19) identisch ist, um eine Kontinuität des Außenprofils der Lippe (19A) zu bilden.

2. Tür (5, 5A, 5B) eines Kraftfahrzeugs (1) nach Anspruch 1, **dadurch gekennzeichnet, dass** das untere Ende (19A.1) der Lippe (19A) der Scheibendichtung (19) einen reduzierten Querschnitt aufweist und durch den Lippenabschnitt (29) der Zierkappe (27) hindurch verlegt ist.

3. Tür (5, 5A, 5B) eines Kraftfahrzeugs (1) nach Anspruch 1 oder 2, **dadurch gekennzeichnet, dass** der Lippenabschnitt (29) der Zierkappe (27) sich in einer vertikalen Hauptrichtung oder in einer Neigung von weniger als 30° in Bezug auf eine vertikale Richtung (z) über eine Länge (LI) erstreckt, die kleiner oder gleich 30 mm ist.

4. Tür (5, 5A, 5B) eines Kraftfahrzeugs (1) nach einem der Ansprüche 1 bis 3, **dadurch gekennzeichnet, dass** die Zierkappe (27) ferner einen Träger (31) umfasst, der an der Innenwand unter der Dichtung (21) befestigt ist.

5. Tür (5, 5A, 5B) eines Kraftfahrzeuges (1) nach Anspruch 4, **dadurch gekennzeichnet, dass** der Träger (31) eine Nut (31A) aufweist, die eine obere Falzkante (13A) der Innenverkleidung umgreift.

6. Tür (5, 5A, 5B) eines Kraftfahrzeugs (1) nach einem der Ansprüche 4 und 5, **dadurch gekennzeichnet, dass** der Lippenabschnitt (29) der Zierkappe (27) aus einem elastomeren Material besteht, das auf den Träger (31) aus starrem Kunststoff aufgeformt ist.

7. Tür (5, 5A, 5B) eines Kraftfahrzeugs (1) nach einem der Ansprüche 1 bis 6, **dadurch gekennzeichnet, dass** das obere Ende (21A.1) des Seitenrandes (21A) der Dichtung (21) in Bezug auf einen oberen Rand (21B) der Dichtung (21) vertikal zurückversetzt ist.

8. Tür (5, 5A, 5B) eines Kraftfahrzeugs (1) nach einem der Ansprüche 1 bis 7, **dadurch gekennzeichnet, dass** die Scheibendichtung (19) eine feste Scheibendichtung (19) ist.

9. Kraftfahrzeug (1) mit mindestens zwei Glastüren (5, 5A, 5B), **dadurch gekennzeichnet, dass** mindestens eine der mindestens zwei Glastüren (5, 5A, 5B) nach einem der Ansprüche 1 bis 8 ist.

## Claims

1. Motor vehicle door (5, 5A, 5B) (1), comprising:
- an outer panel (11);
- a lining (13) forming an inner panel arranged against the outer panel (11), and a glass frame (15);
- a glass seal (19) mounted on the glass frame (15), with a lip (19A) against said glass frame (15);
- a lining (21) arranged against the inner panel and having a lateral edge (21A) with an upper end (21A.1) aligned with a lower end (19A.1) of the lip (19A) of the glass joint (19);
said door (5, 5A, 5B) further comprising:
- a trim (27) comprising a lip portion (29) adjacent to the lower end (19A.1) of the lip (19A) of the glass joint (19) and to the upper end (21A.1) of the lateral edge (21A) of the trim (21), **characterized in that** the lip portion (29) of the trim (27) has an external transverse profile identical to an external transverse profile of the lip (19A) of the glass joint (19), in such a manner forming a continuity of the external profile of said lip (19A).

2. Door (5, 5A, 5B) of a motor vehicle (1) according to claims 1, **characterized in that** the lower end (19A. 1) of the lip (19A) of the glass joint (19) has a reduced section and is covered by the lip portion (29) of the trim (27).

3. Door (5, 5A, 5B) of a motor vehicle (1) according to claim 1 or 2, **characterized in that** the lip portion (29) of the trim (27) extends in a main vertical direction or inclined by less than 30° with respect to a vertical direction (z), over a length (Ll) which is less than or equal to 30 mm.

4. Door (5, 5A, 5B) of a motor vehicle (1) according to one of claims 1 to 3, **characterized in that** the trim (27) further comprises a support (31) fixed to the inner panel under the lining (21).

5. Door (5, 5A, 5B) of a motor vehicle (1) according to claim 4, **characterized in that** the support (31) comprises a groove (31A) fitting on an upper edge of rabbet (13A) of the inner panel.

6. Door (5, 5A, 5B) of a motor vehicle (1) according to one of claims 4 and 5, **characterized in that** the lip portion (29) of the trim (27) is made of elastomeric material overmolded on the support (31) made of rigid plastic material.

7. Door (5, 5A, 5B) of a motor vehicle (1) according to one of claims 1 to 6, **characterized in that** the upper end (21A.1) of the lateral edge (21A) of the lining (21) is set back vertically with respect to an upper edge (21B) of the said lining (21).

8. Door (5, 5A, 5B) of a motor vehicle (1) according to one of claims 1 to 7, **characterized in that** the glass joint (19) is a fixed glass joint (19).

9. Motor vehicle (1) comprising at least two glass doors (5, 5A, 5B), **characterized in that** at least one of the at least two glass doors (5, 5A, 5B) is according to one of claims 1 to 8.
